(19) Europäisches Patentamt / European Patent Office / Office européen des brevets

(11) **EP 4 447 244 A1**

(12) **EUROPEAN PATENT APPLICATION**

(43) Date of publication:
**16.10.2024 Bulletin 2024/42**

(21) Application number: **23307048.1**

(22) Date of filing: **24.11.2023**

(51) International Patent Classification (IPC):
*H02H 3/087* (2006.01)   *H02H 3/24* (2006.01)
*H02H 3/38* (2006.01)   *H02H 3/10* (2006.01)

(52) Cooperative Patent Classification (CPC):
**H02H 3/087; H02H 3/243; H02H 3/38;** H02H 3/006;
H02H 3/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.04.2023 CN 202310402761**

(71) Applicant: **SCHNEIDER ELECTRIC INDUSTRIES SAS**
**92500 Rueil-Malmaison (FR)**

(72) Inventors:
• **LU, Feng**
**Shanghai 201203 (CN)**
• **CHEN, Xiaohang**
**Shanghai 201203 (CN)**
• **WANG, Han**
**Shanghai 201203 (CN)**
• **FENG, Jie**
**Shanghai 201203 (CN)**
• **SONG, Yangfeng**
**Shanghai 201203 (CN)**
• **CHEN, Jiamin**
**Shanghai 201203 (CN)**
• **BAI, Wanlong**
**Shanghai 201203 (CN)**

(74) Representative: **Manitz Finsterwald**
**Patent- und Rechtsanwaltspartnerschaft mbB**
**Martin-Greif-Strasse 1**
**80336 München (DE)**

(54) **CIRCUIT BREAKER**

(57)    A circuit breaker is disclosed, including: an input side including a first input end (IN1) and a second input end (IN2) for respectively connecting to a first line and a second line of a power supply; an output side including a first output end (OUT1) and a second output end (OUT2) for respectively connecting two ends of an electric load to form a load loop; a switch unit (101) arranged between the input side and the output side for turning on and turning off the load loop; a current detection unit (102) for detecting a loop current of the load loop; a voltage detection unit (103) for detecting a loop voltage between the first line and the second line; a control circuit (104) including at least one comparator, the control circuit is configured for controlling whether to turn off the switch unit according to comparison results.

Fig. 1

**Description**

TECHNICAL FIELD

The present disclosure relates to the field of circuit breakers, particularly to circuit breakers that realize overcurrent protection.

BACKGROUND

Circuit breaker is a switching apparatus responsible for turning on and turning off the current under normal circuit conditions and can carry the current in abnormal circuit conditions within a specified time, thus it is the core component of maintaining the safe and reliable operation of the electric power grid.

The circuit breaker can realize overcurrent protection. Overcurrent means that the current of an electrical equipment or a line exceeds a specified value. Common overcurrents include short-circuit overcurrent, surge overcurrent and fault overcurrent. In specific scenarios, for example in terminal power distribution, it is expected that the main loop will not turn off in the case of surge overcurrent, and will only turn off in the case of short-circuit overcurrent or fault overcurrent.

However, the current circuit breaker mainly adopts two technical solutions in the case of applying to overcurrent protection: one solution is to switch on/off only according to whether the loop current exceeds a preset current threshold, which the type of overcurrent cannot be distinguished and thus not switching off the main loop in the case of surge overcurrent cannot be realized. Another solution for example, is to switch on/off by virtue of Analog-to-Digital Converter (ADC) combined with Microcontroller (MCU) to observe the current features, which the type of overcurrent can be distinguished, but it takes more than several milliseconds and the circuit protection cannot be realized quickly.

SUMMARY

In order to solve at least one technical problem above, embodiments of the present disclosure provide a circuit breaker that capable of turning on and turning off in the case of distinguishing the type of overcurrent without analyzing the current waveform through microcontrollers. The circuit breaker can realize microsecond level overcurrent protection.

An embodiment of the present disclosure provides a circuit breaker, comprising:

An input side comprising a first input end and a second input end for respectively connecting to a first line and a second line of a power supply;

An output side comprising a first output end and a second output end for respectively connecting two ends of an electric load to form a load loop;

A switch unit arranged between the input side and the output side for turning on and turning off the load loop;

A current detection unit for detecting a loop current of the load loop;

A voltage detection unit for detecting a loop voltage between the first line and the second line;

A control circuit comprising a comparator, the control circuit is configured for comparing the loop current with a preset short-circuit current threshold, comparing the loop current with a preset surge current threshold, and comparing the loop voltage with a preset surge voltage threshold by means of the comparator, and controlling whether to turn off the switch unit according to comparison results.

According to an embodiment of the present disclosure, controlling whether to turn off the switch unit according to the comparison results comprises: in a case where the loop current is lower than the short-circuit current threshold but higher than the surge current threshold and the loop voltage is higher than the surge voltage threshold, controlling not to turn off the switch unit.

According to an embodiment of the present disclosure, controlling whether to turn off the switch unit according to the comparison results comprises: in a case where the loop current is higher than the short-circuit current threshold and the loop voltage is higher than the surge voltage threshold, controlling to turn off the switch unit.

According to an embodiment of the present disclosure, controlling whether to turn off the switch unit according to the comparison results comprises: in a case where the loop current is higher than the short-circuit current threshold and the loop voltage is lower than the surge voltage threshold, controlling to turn off the switch unit.

According to an embodiment of the present disclosure, controlling whether to turn off the switch unit according to the comparison results comprises: in a case where the loop current is lower than the short-circuit current threshold but higher than the surge current threshold and the loop voltage is lower than the surge voltage threshold, controlling to turn off the switch unit.

According to an embodiment of the present disclosure, the comparator comprises a first comparator, a second comparator and a third comparator: the first comparator is configured to compare the loop current with the short-circuit current threshold; the second comparator is configured to compare the loop current with the surge current threshold;

the third comparator is configured to compare the loop voltage with the surge voltage threshold.

According to an embodiment of the present disclosure, a first input end of the first comparator receives a voltage signal corresponding to the loop current, a second input end of the first comparator receives a voltage signal corresponding to the short-circuit current threshold, and an output end of the first comparator outputs a trigger signal in a case where the voltage signal corresponding to the loop current is higher than the voltage signal corresponding to the short-circuit current threshold;

A first input end of the second comparator receives a voltage signal corresponding to the loop current, a second input end of the second comparator receives a voltage signal corresponding to the surge current threshold, and an output end of the second comparator outputs a predetermined high level in a case where the voltage signal corresponding to the loop current is higher than the voltage signal corresponding to the surge current threshold;

A first input end of the third comparator receives a voltage signal corresponding to the surge voltage threshold, a second input end of the third comparator receives a voltage signal corresponding to the loop voltage, and an output end of the third comparator outputs a trigger signal in a case where the voltage signal corresponding to the surge voltage threshold is higher than the voltage signal corresponding to the loop voltage, wherein the predetermined high level is converted into the voltage signal corresponding to the surge voltage threshold by means of a level-voltage conversion device arranged between the second comparator and the third comparator, and wherein the control circuit controls to turn off the switch unit in a case where the trigger signal is output.

According to an embodiment of the present disclosure, the switch unit comprises a first solid-state switch module and a first mechanical switch, and the first solid-state switch module is arranged between the first input end and a first end of the first mechanical switch, and a second end of the first mechanical switch is connected to the first output end.

According to an embodiment of the present disclosure, the switch unit also comprises a second solid-state switch module and a second mechanical switch, and the second solid-state switch module is arranged between the second input end and a first end of the second mechanical switch, and a second end of the second mechanical switch is connected to the second output end.

According to an embodiment of the present disclosure, the first solid-state switch module comprises solid-state switches connected in reverse series.

BRIEF DESCRIPTION OF DRAWINGS

In order to illustrate the technical scheme of the embodiments of the present disclosure more clearly, the accompanying drawings required to be used in the description of the embodiments will be briefly introduced below. Obviously, the accompanying drawings in the description below are only some exemplary embodiments of the present disclosure, and other accompanying drawings can be obtained according to these accompanying drawings without creative work for persons having ordinary skill in the art.

Fig. 1 illustrates an exemplary structure diagram of a circuit breaker M of an embodiment of the present disclosure;
Fig. 2 illustrates an exemplary circuit structure diagram of a circuit breaker M of an embodiment of the present disclosure;
Fig. 3 illustrates an exemplary time chart of a circuit breaker M according to the present disclosure in the case of an overcurrent.

DETAILED DESCRIPTION

In order to make the purposes, technical schemes and advantages of the present disclosure more apparent, example embodiments according to the present disclosure will be described in detail below with reference to the accompanying drawings. Obviously, the described embodiments are only a portion of the embodiments of the present disclosure, not all the embodiments of the present disclosure, and it should be understood that the present disclosure is not limited by the example embodiments described here.

In the present specification and the accompanying drawings, substantially same or similar steps and elements are represented by the same or similar reference label, and repeated descriptions of these steps and elements will be omitted. Meanwhile, in the description of the present disclosure, the terms "first", "second", and the like are only used to distinguish descriptions, and cannot be understood as indicating or implying relative importance or ranking.

Unless otherwise defined, all technical and scientific terms used herein have the same meanings as commonly understood by those skilled in the art of the present disclosure. The terms used herein are only for the purpose of describing the embodiments of the disclosure and are not intended to limit the disclosure.

In order to facilitate the description of the present disclosure, the concepts related to the present disclosure are introduced below.

Over-current: the current of an electrical equipment or a line exceeds a specified value. Common types of overcurrent include short-circuit overcurrent, surge overcurrent and fault overcurrent.

Short-circuit overcurrent: for example, overcurrent caused by short-circuit events such as load short circuit, wiring error, etc.

Surge overcurrent: caused by the sudden voltage change, for example, it relates to the on-current caused by the charging of large-capacity capacitors when the electric equipment is switched on for the first time or the thunder surge current caused by the sudden voltage change caused by thunder strike.

Fault overcurrent: for example, overcurrent caused by fault events such as overvoltage breaking down the insulation, equipment damage, etc.

Solid-state switch: also known as contactless switch, it is generally realized by power electronic devices by virtue of power electronic technology. It has the advantages of controlling accurately, fast response, etc.

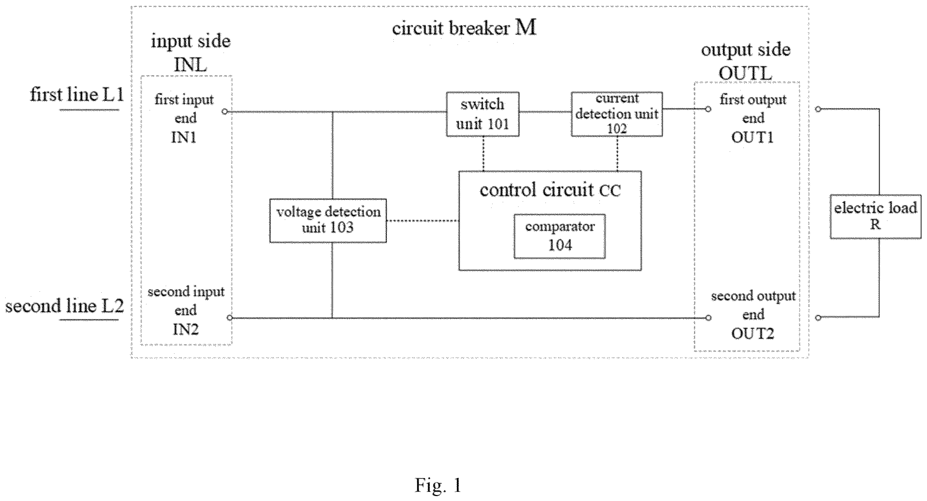

Fig. 1 illustrates an exemplary structure diagram of a circuit breaker M of an embodiment of the present disclosure.

As shown in Fig. 1, the circuit breaker M includes an input side INL, an output side OUTL, a switch unit 101, a current detection unit 102, a voltage detection unit 103, and a control circuit CC.

The input side INL includes a first input end IN1 and a second input end IN2 for respectively connecting to a first line L1 and a second line L2 of a power supply, wherein the power supply can be a DC (direct current) power supply or an AC (alternating current) power supply, and the AC power supply can be, for example, a public power supply network, and in the case of an AC power supply, the first line L1 and the second line L2 are, for example, two phase lines or a phase line and a neutral line respectively.

The output side OUTL includes a first output end OUT1 and a second output end OUT2 for respectively connecting two ends of an electric load R to form a load loop. The electric load can be any load, for example, it can be a load for which it is not desired to turn off the load loop in the case of surge overcurrent, for example a hospital equipment.

The switch unit 101 is arranged between the input side INL and the output side OUTL for turning on and turning off the load loop. The switch unit 101 can include, for example, solid-state switches and/or mechanical switches. The solid-state switches include, for example, insulated gate bipolar transistors (IGBT), field effect transistors, etc.

The current detection unit 102 is used for detecting the loop current I of the load loop, and can be realized in the form of a coil, a current sensor or a shunt resistor, for example. The current detection unit 102 can be arranged between the first input end IN1 and the first output end OUT1 or arranged between the second input end IN2 and the second output end OUT2, for example.

The voltage detection unit 103 is used for detecting the loop voltage U between the first line L1 and the second line L2, and can be realized in the form of a resistance voltage divider or a current detection sensor, etc. For example, the voltage detection unit 103 can be arranged at the input side INL or arranged at the output side OUTL or other positions where the corresponding detection function can be realized.

The control circuit CC includes a comparator 104, compares the loop current I with the preset short-circuit current threshold $I_{SC}$, the loop current I with the preset surge current threshold $I_S$, and the loop voltage U with the preset surge voltage threshold $U_{th}$, and controls whether to turn off the switch unit 101 according to the comparison results.

In order to realize a more accurate determination, it is possible to control whether to turn off the switch unit 101 after the comparison results has lasted for a predetermined time period. The predetermined time period can be, for example, a time period of ns level. For example, the predetermined time period can be determined according to the charging time of the capacitor in the circuit.

In the event of an overcurrent in the circuit, abnormal changes occur in the loop voltage and loop current. However, in surge overcurrent, the changes of loop voltage and loop current are different from those under short-circuit overcurrent or fault overcurrent. In surge overcurrent, both the loop voltage and loop current rise sharply. In short-circuit overcurrent or fault overcurrent, the loop current rises sharply, while the loop voltage measured at the input side of the circuit breaker will drop slightly. Thus, the type of overcurrent can be determined by the magnitude and the change trend of the loop voltage and loop current after the occurrence of overcurrent, thereby making corresponding actions of switching off or not switching off. At the same time, in order to improve the speed of overcurrent protection, the present disclosure makes the determination of the type of overcurrent and controls the switch unit through a control circuit containing the comparator hardware circuit.

In the case of overcurrent, the control circuit CC of the present disclosure can determine the type of overcurrent according to the comparison results of one or more comparators 104 and control whether to turn off the switch unit 101.

For example, in the case that the comparison results are: the loop current I is higher than the short-circuit current threshold $I_{SC}$ and the loop voltage U is lower than the surge voltage threshold $U_{th}$, the control circuit CC can determine that the type of overcurrent is short-circuit overcurrent, thereby controlling to turn off the switch unit 101.

For example, in the case that the comparison results are: the loop current I is higher than the short-circuit current threshold $I_{SC}$ and the loop voltage U is higher than the surge voltage threshold $U_{th}$, the control circuit CC can determine that the type of overcurrent is fault overcurrent, thereby controlling to turn off the switch unit 101.

For example, in the case that the comparison results are: the loop current I is lower than the short-circuit current threshold $I_{SC}$ but higher than the surge current threshold and the loop voltage U is lower than the surge voltage threshold $U_{th}$, the control circuit CC can determine that the type of overcurrent is short-circuit overcurrent, thereby controlling to turn off the switch unit 101.

For example, in the case that the comparison results are: the loop current I is lower than the short-circuit current threshold $I_{SC}$ but higher than the surge current threshold and the loop voltage U is higher than the surge voltage threshold $U_{th}$, the control circuit CC can determine that the type of overcurrent is surge overcurrent, thereby controlling not to turn off the switch unit 101.

In order to express more intuitively, the determination and control logic of the control circuit CC according to an embodiment of the present disclosure is illustrated in Table 1:

Table 1: Determination and control logic of control circuit CC

| Loop current (I) | Loop voltage (U) | Type of overcurrent | Action |
|---|---|---|---|
| $I > I_{SC}$ | $U < U_{th}$ | short-circuit | turn off |
| $I > I_{SC}$ | $U > U_{th}$ | fault | turn off |
| $I_S < I < I_{SC}$ | $U < U_{th}$ | short-circuit | turn off |
| $I_S < I < I_{SC}$ | $U > U_{th}$ | surge | not turn off |

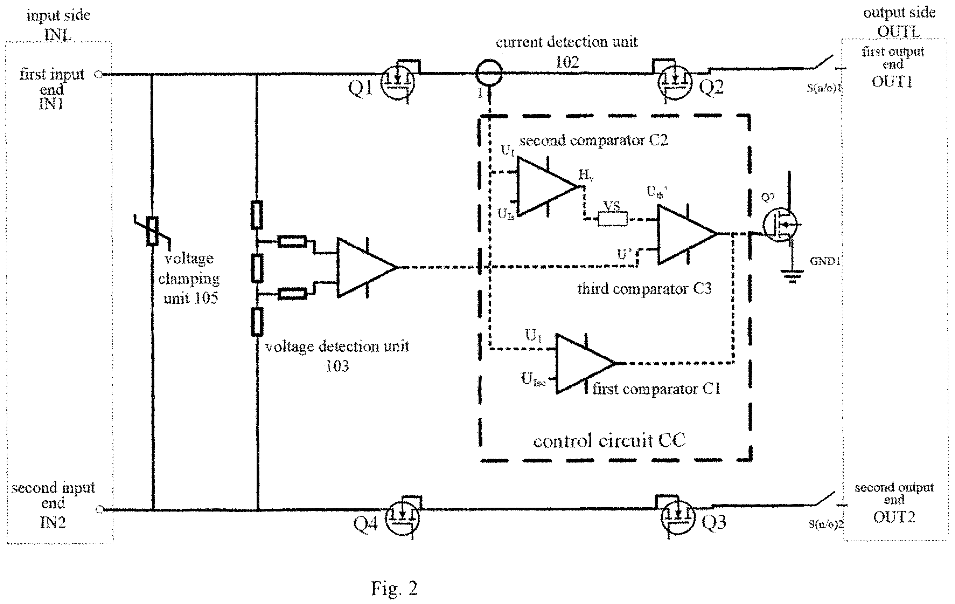

It should be illustrated that in the scope of the embodiments of the present disclosure, the surge current threshold $I_S$ is set to be smaller than the short-circuit current threshold $I_{SC}$. This is due to the circuit breaker M according to an embodiment of the present disclosure can have an anti-surge unit itself or because there is an anti-surge unit in the circuit to which the circuit breaker M is connected. In the former option, the circuit breaker M can have a voltage clamping unit (see Fig. 2) or other surge protection unit, the voltage clamping unit is connected between the first line L1 and the second line L2 for voltage clamping the circuit breaker M and providing anti-surge protection. In the latter option, the voltage clamping unit can be arranged between the power supply side and the circuit breaker M instead of being a constituent part of the circuit breaker M. Through the anti-surge unit, the maximum surge current in the circuit is smaller than the short-circuit current threshold. Thus, the surge current threshold $I_S$ can be set to be smaller than the short-circuit current threshold $I_{SC}$.

Fig. 2 illustrates an exemplary circuit structure diagram of a circuit breaker M of an embodiment of the present disclosure.

As shown in Fig. 2, the switch unit 101 includes a first solid-state switch module and a first mechanical switch S(n/o)1 connected between the first line L1 and the electric load R. Optionally, the switch unit 101 also includes a second solid-state switch module and a second mechanical switch S(n/o)2 connected between the second line L2 and the electric load R.

The first solid-state switch module can include solid-state switches Q1 and Q2 in the form of NMOS connected in reverse series, wherein the solid-state switches Q1 and Q2 are arranged between the first input end IN1 and the first end of the first mechanical switch S(n/o)1 and are respectively arranged upstream and downstream of the current detection unit 102, and the second end of the first mechanical switch S(n/o)1 is connected to the first output end OUT1. The second solid-state switch module can include solid-state switches Q3 and Q4 in the form of NMOS connected in reverse series, wherein the solid-state switches Q3 and Q4 are arranged between the second input end IN2 and the first end of the second mechanical switch S(n/o)2, and the second end of the second mechanical switch S(n/o)2 is connected to the second output end OUT2. Therefore, the bilateral and bidirectional circuit protection of the electric load from the first line L1 to the electric load R and from the electric load R to the second line L2 is realized.

Optionally, the first mechanical switch S(n/o)1 and the second mechanical switch S(n/o)2 are designed in linkage.

The current detection unit 102 is exemplarily realized as a current sensor. The current detection unit 102 is arranged between the solid-state switch Q1 and the solid-state switch Q2, and detects the loop current I of the load loop.

The voltage detection unit 103 is exemplarily realized by ways of resistance voltage division and amplification. The voltage detection unit 103 detects the loop voltage U between the first line L1 and the second line L2.

The control circuit CC for controlling whether to turn off the switch unit 101 includes a comparator 104, which includes a first comparator C1, a second comparator C2, and a third comparator C3.

The first comparator C1 is configured to compare the loop current I with the short-circuit current threshold $I_{SC}$. The second comparator C2 is configured to compare the loop current I with the surge current threshold $I_S$. The third comparator C3 is configured to compare the loop voltage U with the surge voltage threshold $U_{th}$.

In order to make the above comparisons, for example, the loop current, the loop voltage, the short-circuit current threshold $I_{SC}$, the surge current threshold $I_S$, and the surge voltage threshold $U_{th}$ can be converted into comparable signals.

The first input end of the first comparator C1 receives the voltage signal Ui corresponding to the loop current I, the second input end receives the voltage signal $U_{Isc}$ corresponding to the short-circuit current threshold $I_{SC}$, and the output end outputs a high level as a trigger signal Trip in the case that the voltage signal Ui corresponding to the loop current I is higher than the voltage signal $U_{Isc}$ corresponding to the short-circuit current threshold $I_{SC}$, otherwise outputs a low level.

The first input end of the second comparator C2 receives the voltage signal Ui corresponding to the loop current I, the second input end receives the voltage signal $U_{Is}$ corresponding to the surge current threshold $I_S$, and the output end outputs a predetermined high level $H_v$ in the case the voltage signal Ui corresponding to the loop current I is higher than the voltage signal $U_{Is}$ corresponding to the surge current threshold $I_S$, otherwise outputs a low level.

In the scope of the embodiments of the present disclosure, in the case of surge overcurrent, short-circuit overcurrent or fault overcurrent, the loop current I is at least higher than the surge current threshold $I_S$, and thus the second comparator C2 always outputs a predetermined high level $H_v$ in the determination and control logic of the control circuit CC as shown in Table 1.

A level-voltage conversion device VS is arranged between the second comparator C2 and the third comparator C3 for converting a predetermined high level $H_v$ output by the second comparator C2 into a voltage signal $U_{th}$' corresponding to the surge voltage threshold $U_{th}$ and providing it to the third comparator C3.

The first input end of the third comparator C3 receives the voltage signal $U_{th}$' corresponding to the surge voltage threshold $U_{th}$, the second input end receives the voltage signal U' corresponding to the loop voltage U, and the output end outputs a high level as a trigger signal Trip in the case that the voltage signal $U_{th}$' corresponding to the surge voltage threshold $U_{th}$ is higher than the voltage signal U' corresponding to the loop voltage U, otherwise outputs a low level.

In the exemplary control circuit CC, it is not directly comparing the surge voltage threshold $U_{th}$ with the loop voltage U, but rather comparing the voltage signal U' corresponding to the loop voltage U with the voltage signal $U_{th}$' corresponding to the surge voltage threshold $U_{th}$, and it should be understood that the comparison results of the actually compared signals can reflect the same comparison results as the current/voltage to be compared in the control logic through a particular circuit arrangement.

In order to express more intuitively, the input and output signals of the control circuit CC, or say, the first comparator C1, the second comparator C2 and the third comparator C3 are illustrated in Table 2:

Table 2: Input and output signals of the first comparator C1, the second comparator C2 and the third comparator C3

|  | First input end | Second input end | Comparison results | Output end |
|---|---|---|---|---|
| First comparator C1 | $U_I$ | $U_{Isc}$ | $U_I > U_{Isc}$ | high level (Trip) |
|  |  |  | $U_I < U_{Isc}$ | low level |
| Second comparator C2 | $U_I$ | $U_{Is}$ | $U_I > U_{Isc}$ | high level ($H_v$) |
|  |  |  | $U_I < U_{Isc}$ | low level |
| Third comparator C3 | $U_{th}$' | U' | $U_{th}$' > U' | high level (Trip) |
|  |  |  | $U_{th}$' < U' | low level |

It can be seen that the first comparator C1 and the third comparator C3 output the trigger signal Trip in specific situations, and the second comparator C2 does not directly output the trigger signal Trip, but provides the input signal for the third comparator C3.

The switch unit 101 is controlled to turn off in the case that the trigger signal Trip is output in the control circuit CC. The trigger signal is exemplarily received by Q7 in the form of a field effect transistor and the switch unit 101 is controlled to turn off. Due to the fast response characteristics of the solid-state switches, the solid-state switches Q1, Q2, Q3 and Q4 are switched off prior to the first mechanical switch S(n/o)1 and the second mechanical switch S(n/o)2, and provide quick overcurrent protection for the load circuit, and then the first mechanical switch S(n/o)1 and the second mechanical switch S(n/o)2 are switched off to realize reliable physical isolation.

In order to realize a more accurate determination, the corresponding output signal can be output after the comparison results has lasted for a predetermined time period. The predetermined time period can be, for example, a time period of ns level. For example, the predetermined time period can be determined according to the charging time of the capacitor in the circuit.

Optionally, the control result of the switch unit 101 is signaled to the microcontroller in the circuit or circuit breaker M.

For example, the circuit breaker M is applied to an AC power supply. The circuit voltage of the AC power supply is set a 250V AC power frequency voltage, the instantaneous peak current that the main power device can bear in the circuit is 1000A, and the maximum current of circuit breaker M is 32 A.

As shown in Fig. 2, the circuit breaker M has a voltage clamping unit 105 realized in the form of a varistor. The maximum clamping residual voltage of the varistor is set 1200V.

The surge level is set 2000V 2ohm 8/20us. Therefore, the maximum surge current $I_{SM}$ in the circuit with certain anti-surge protection can be calculated:

$$I_{SM} = (2000V - 1200V)/2ohm = 400A$$

Wherein, 2000V-1200V represents the voltage difference between the surge source and the input side of the circuit breaker M, 2ohm represents the internal resistance of the surge source, and the ratio of the voltage difference to the internal resistance gives the maximum surge current $I_{SM}$ in the circuit flowing through the surge source.

For example, the surge current threshold, short-circuit current threshold and surge voltage threshold can be set as follows:

The surge current threshold can be set twice the conventional current of the circuit breaker:

$$I_S = 32A*1.414*2 = 90.5A$$

The short-circuit current threshold can be set 10 times the nominal current of the circuit breaker:

$$I_{SC} = 32A*10*1.414*1.2 = 543A$$

The threshold of surge voltage can be set 1.4 times the normal working voltage:

$$U_{th} = 250V*1.414*1.4 = 495V$$

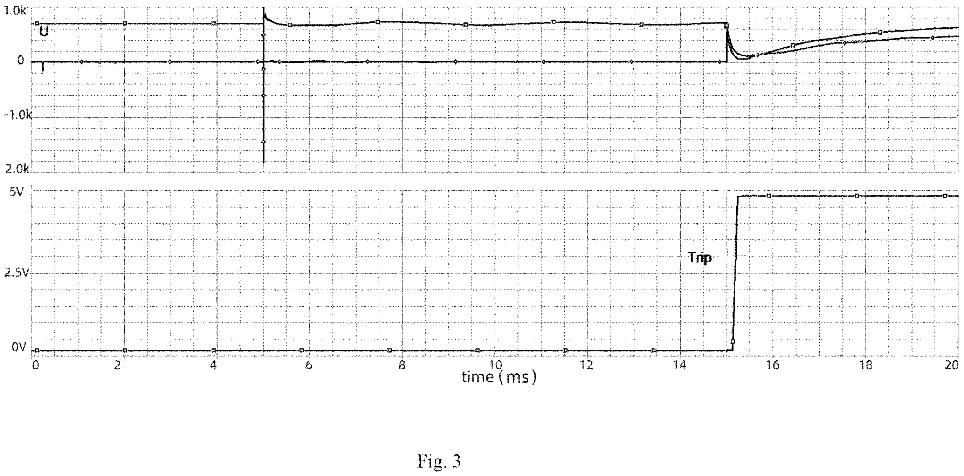

Fig. 3 illustrates an exemplary time chart of the circuit breaker M according to the present disclosure in the case of an overcurrent.

For example, the circuit breaker M according to an embodiment of the present disclosure can be simulated by means of Pspice software, and the surge overcurrent and short-circuit overcurrent are imposed in the loop respectively to obtain the magnitude-time diagram regarding the loop voltage U, the loop current I and the output signal of the control circuit CC as shown in Figure 3.

In the upper part of Fig. 3, the magnitude of the loop voltage U and the loop current I are represented by the vertical axis. In the lower part of Fig. 3, the magnitude of the output signal of the control circuit CC is represented by the vertical axis. The upper part and the lower part share the horizontal axis representing time.

As shown in Fig. 3, abnormal changes of the loop voltage U and the loop current I occur at the 5th and 15th ms, respectively. By observing the waveforms of the loop voltage U and the loop current I at the 5th ms, it can be seen that the loop voltage U rises and the loop current I oscillates instantaneously, therefore it is inferred that the overcurrent is a surge overcurrent. Observing the waveforms of the loop voltage U and the loop current I at the 15th ms, it can be seen that the loop voltage U drops, and the loop current I rises rapidly and then drops, therefore it is inferred that the overcurrent is a short-circuit overcurrent.

Correspondingly, in the lower part of Fig. 3, the output signal of the control circuit CC is a low-level signal at the 5th ms, that is, no trigger signal Trip is output, and it quickly changes from a low-level signal to a high-level signal, or say, a trigger signal Trip within the time period from 15th ms to 15.5ms. The simulation result shows that the control circuit CC does not output the trigger signal Trip in the case of surge and overcurrent, but outputs the trigger signal Trip in the case of short-circuit overcurrent.

The circuit breaker M according to an embodiment of the present disclosure realizes the determination of the type of overcurrent and the corresponding switch-off control through at least one comparator without analyzing the current/voltage waveform through a microcontroller, and realizes reliable and microsecond level overcurrent protection with the type of overcurrent is differentiated.

In general, various example embodiments of the present disclosure can be implemented in hardware or dedicated circuits, software, firmware, logic, or any combination thereof. Some aspects can be implemented in hardware, while other aspects can be implemented in firmware or software that can be executed by a controller, a microprocessor or other computing equipments. When aspects of the embodiments of the present disclosure are illustrated or described as block diagrams, flowcharts, or are represented using some other graphs, it will be understood that the blocks, apparatuses, systems, techniques, or methods described here can be implemented in hardware, software, firmware, dedicated circuits or logic, general-purpose hardware or controllers or other computing equipments, or some combination thereof, as non-limiting examples.

The example embodiments of the present disclosure described in detail above are only illustrative, not limited. It should be understood by those skilled in the art that various modifications and combinations can be made to these embodiments or their features without departing from the principles and the spirit of the present disclosure, and such modifications should fall within the scope of the present disclosure.

**Claims**

1. A circuit breaker comprising:

   an input side comprising a first input end and a second input end for respectively connecting to a first line and a second line of a power supply;
   an output side comprising a first output end and a second output end for respectively connecting two ends of an electric load to form a load loop;
   a switch unit arranged between the input side and the output side for turning on and turning off the load loop;
   a current detection unit for detecting a loop current of the load loop;
   a voltage detection unit for detecting a loop voltage between the first line and the second line;
   a control circuit comprising at least one comparator, the control circuit is configured for comparing the loop current with a preset short-circuit current threshold, comparing the loop current with a preset surge current threshold, and comparing the loop voltage with a preset surge voltage threshold by means of the comparator, and controlling whether to turn off the switch unit according to comparison results.

2. The circuit breaker of claim 1, wherein said controlling whether to turn off the switch unit according to the comparison results comprises:
   in a case where the loop current is lower than the short-circuit current threshold but higher than the surge current threshold and the loop voltage is higher than the surge voltage threshold, controlling not to turn off the switch unit.

3. The circuit breaker of claim 1, wherein said controlling whether to turn off the switch unit according to the comparison results comprises:
   in a case where the loop current is higher than the short-circuit current threshold and the loop voltage is higher than the surge voltage threshold, controlling to turn off the switch unit.

4. The circuit breaker of claim 1, wherein said controlling whether to turn off the switch unit according to the comparison results comprises:
   in a case where the loop current is higher than the short-circuit current threshold and the loop voltage is lower than the surge voltage threshold, controlling to turn off the switch unit.

5. The circuit breaker of claim 1, wherein said controlling whether to turn off the switch unit according to the comparison results comprises:
   in a case where the loop current is lower than the short-circuit current threshold but higher than the surge current threshold and the loop voltage is lower than the surge voltage threshold, controlling to turn off the switch unit.

6. The circuit breaker of claim 1, wherein the comparator comprises a first comparator, a second comparator and a third comparator;

   the first comparator is configured to compare the loop current with the short-circuit current threshold;
   the second comparator is configured to compare the loop current with the surge current threshold; the third comparator is configured to compare the loop voltage with the surge voltage threshold.

**7.** The circuit breaker of claim 6, wherein

a first input end of the first comparator receives a voltage signal corresponding to the loop current, a second input end of the first comparator receives a voltage signal corresponding to the short-circuit current threshold, and an output end of the first comparator outputs a trigger signal in a case where the voltage signal corresponding to the loop current is higher than the voltage signal corresponding to the short-circuit current threshold;
a first input end of the second comparator receives a voltage signal corresponding to the loop current, a second input end of the second comparator receives a voltage signal corresponding to the surge current threshold, and an output end of the second comparator outputs a predetermined high level in a case where the voltage signal corresponding to the loop current is higher than the voltage signal corresponding to the surge current threshold;
a first input end of the third comparator receives a voltage signal corresponding to the surge voltage threshold, a second input end of the third comparator receives a voltage signal corresponding to the loop voltage, and an output end of the third comparator outputs a trigger signal in a case where the voltage signal corresponding to the surge voltage threshold is higher than the voltage signal corresponding to the loop voltage, wherein the predetermined high level is converted into the voltage signal corresponding to the surge voltage threshold by means of a level-voltage conversion device arranged between the second comparator and the third comparator, wherein the control circuit controls to turn off the switch unit in a case where the trigger signal is output.

**8.** The circuit breaker of claim 1, wherein
the switch unit comprises a first solid-state switch module and a first mechanical switch, and the first solid-state switch module is arranged between the first input end and a first end of the first mechanical switch, and a second end of the first mechanical switch is connected to the first output end.

**9.** The circuit breaker of claim 8, wherein
the switch unit also comprises a second solid-state switch module and a second mechanical switch, and the second solid-state switch module is arranged between the second input end and a first end of the second mechanical switch, and a second end of the second mechanical switch is connected to the second output end.

**10.** The circuit breaker of claim 8, wherein
the first solid-state switch module comprises solid-state switches connected in reverse series.

circuit breaker M

input side
INL

output side
OUTL

first line L1

first input
end
IN1

switch
unit 101

current
detection unit
102

first output
end
OUT1

electric load
R

control circuit CC

voltage detection
unit 103

comparator
104

second line L2

second input
end
IN2

second output
end
OUT2

Fig. 1

EP 4 447 244 A1

Fig. 2

Fig. 3

EP 4 447 244 A1

Europäisches
Patentamt

European
Patent Office

Office européen
des brevets

# EUROPEAN SEARCH REPORT

Application Number

EP 23 30 7048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/015820 A1 (SIEMENS AG [DE]) 23 January 2020 (2020-01-23) | 1-6,8-10 | INV. H02H3/087 |
| A | * abstract; figures ,6,7,8,9 * * page 5, line 18 - page 7, line 31 * * page 30, line 20 - page 33, line 25 * * page 37, line 20 - page 38, line 18 * ----- | 7 | H02H3/24 H02H3/38 ADD. H02H3/10 |
| X | US 11 108 223 B2 (JOHNSON CONTROLS FIRE PROT LP [US]) 31 August 2021 (2021-08-31) | 1-6,8-10 | |
| A | * abstract; figures 2,3,4 * * column 5, lines 1-41 * * column 6, lines 23-36 * * column 7, lines 4-58 * * column 8, lines 23-50 * ----- | 7 | |
| X | WO 2022/149798 A1 (SAMSUNG ELECTRONICS CO LTD [KR]) 14 July 2022 (2022-07-14) * abstract; figures 2a,3a * * paragraphs [0047] - [0060] * & US 2023/350481 A1 (KIM HEETAE [KR] ET AL) 2 November 2023 (2023-11-02) * paragraphs [0057] - [0068]; figures 2a,3a * ----- | 1-6 | |
| A | EP 4 106 125 A1 (CARRIER FIRE & SECURITY EMEA BV [BE]) 21 December 2022 (2022-12-21) * paragraphs [0045] - [0057]; figures 3,4 * ----- | 1-10 | TECHNICAL FIELDS SEARCHED (IPC) H02H |

The present search report has been drawn up for all claims

| Place of search | Date of completion of the search | Examiner |
|---|---|---|
| Munich | 10 May 2024 | Palukova, Mila |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                  

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 7048

10-05-2024

| Patent document cited in search report | Publication date | Patent family member(s) | Publication date |
|---|---|---|---|
| WO 2020015820 A1 | 23-01-2020 | CN 112640238 A | 09-04-2021 |
| | | EP 3797460 A1 | 31-03-2021 |
| | | WO 2020015820 A1 | 23-01-2020 |
| US 11108223 B2 | 31-08-2021 | NONE | |
| WO 2022149798 A1 | 14-07-2022 | AU 2021417180 A1 | 27-07-2023 |
| | | BR 112023013868 A2 | 17-10-2023 |
| | | EP 4261656 A1 | 18-10-2023 |
| | | JP 2024502478 A | 19-01-2024 |
| | | US 2023350481 A1 | 02-11-2023 |
| | | WO 2022149798 A1 | 14-07-2022 |
| EP 4106125 A1 | 21-12-2022 | EP 4106125 A1 | 21-12-2022 |
| | | KR 20220169387 A | 27-12-2022 |
| | | US 2022404433 A1 | 22-12-2022 |

EPO FORM P0459

For more details about this annex : see Official Journal of the European Patent Office, No. 12/82